(19) Europäisches Patentamt

European Patent Office

Office européen des brevets

(11) **EP 4 437 155 B1**

(12) **EUROPEAN PATENT SPECIFICATION**

(45) Date of publication and mention of the grant of the patent:
**04.06.2025 Bulletin 2025/23**

(21) Application number: **22793471.8**

(22) Date of filing: **17.10.2022**

(51) International Patent Classification (IPC):
$C22C\ 38/02^{(2006.01)}$    $C22C\ 38/04^{(2006.01)}$
$C22C\ 38/06^{(2006.01)}$    $C22C\ 38/12^{(2006.01)}$
$C22C\ 38/14^{(2006.01)}$    $C22C\ 38/22^{(2006.01)}$
$C22C\ 38/24^{(2006.01)}$    $C22C\ 38/26^{(2006.01)}$
$C22C\ 38/28^{(2006.01)}$    $C22C\ 38/32^{(2006.01)}$
$C22C\ 38/34^{(2006.01)}$    $C22C\ 38/38^{(2006.01)}$
$C23C\ 2/02^{(2006.01)}$    $C23C\ 28/02^{(2006.01)}$
$C21D\ 9/46^{(2006.01)}$    $C21D\ 1/76^{(2006.01)}$
$C21D\ 3/04^{(2006.01)}$    $C21D\ 8/02^{(2006.01)}$
$C23C\ 28/00^{(2006.01)}$    $C23C\ 2/06^{(2006.01)}$

(52) Cooperative Patent Classification (CPC):
**C22C 38/02; C21D 1/76; C21D 3/04; C21D 8/0257; C21D 9/46; C22C 38/04; C22C 38/06; C22C 38/12; C22C 38/14; C22C 38/22; C22C 38/24; C22C 38/26; C22C 38/28; C22C 38/32; C22C 38/34;**      (Cont.)

(86) International application number:
**PCT/IB2022/059926**

(87) International publication number:
**WO 2023/094909 (01.06.2023 Gazette 2023/22)**

(54) **ZINC COATED MN-CONTAINING ADVANCED HIGH STRENGTH STEEL AND METHOD OF MANUFACTURING THE SAME**

ZINKBESCHICHTETER MN-HALTIGER FORTSCHRITTLICHER HOCHFESTER STAHL UND VERFAHREN ZUR HERSTELLUNG DAVON

ACIER À HAUTE RÉSISTANCE AVANCÉ CONTENANT DU MN REVÊTU DE ZINC ET SON PROCÉDÉ DE FABRICATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Validation States:
**MA**

(30) Priority: **24.11.2021 PCT/IB2021/060917**

(43) Date of publication of application:
**02.10.2024 Bulletin 2024/40**

(73) Proprietor: **ArcelorMittal
1160 Luxembourg (LU)**

(72) Inventors:
• **PERLADE, Astrid
   57050 Le Ban-Saint-Martin (FR)**
• **ZHU, Kangying
   57000 Metz (FR)**
• **MATAIGNE, Jean-Michel
   60300 Senlis (FR)**
• **STAUDTE, Jonas
   57950 Montigny-Lès-Metz (FR)**

(74) Representative: **Lavoix
   2, place d'Estienne d'Orves
   75441 Paris Cedex 09 (FR)**

(56) References cited:
   **WO-A1-2021/224662**     **US-A1- 2018 119 263
   US-A1- 2019 003 006**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 437 155 B1

(52) Cooperative Patent Classification (CPC): (Cont.)
**C22C 38/38; C23C 2/02; C23C 2/0222;
C23C 2/0224; C23C 28/3225; C23C 28/325;
C23C 28/345;** C21D 2211/005; C23C 2/06

**Description**

The present invention relates to a manganese-containing galvanized high strength steel sheet having good ability to be coated by liquid zinc, and good properties while being welded. The present invention relates also to a method to obtain such steel sheet.

One of the developments made to improve mechanical properties is to increase content of manganese in steels. The presence of manganese helps to increase ductility of steels thanks to the stabilization of austenite.

In addition to the mechanical requirements, the steel sheet needs a good ability to coating when immersed into the zinc or zinc-alloy galvanizing bath. The coating ability depends on the surface, especially the presence of oxides. Manganese in the steel happens to be an easily oxidizable element and thus reacts with oxygen and water vapor in an annealing furnace to form an oxide on surfaces of the steel sheet. Manganese oxide decreases coatability of the steel sheet within liquid zinc and later zinc coating adherence.

Such steel sheets have also to show a good resistance to liquid metal embrittlement (LME). Zinc or zinc-alloy coated steel sheets are very effective for corrosion resistance and are thus widely used in the automotive industry. However, it has been experienced that arc or resistance welding of certain steels can cause the apparition of cracks due to a phenomenon called Liquid Metal Embrittlement ("LME") or Liquid Metal Assisted Cracking ("LMAC"). This phenomenon is characterized by the penetration of liquid zinc along the grain boundaries of underlying steel substrate, under applied stresses or internal stresses resulting from restraint, thermal dilatation or phases transformations. It is known that adding elements like carbon or silicon are detrimental for LME resistance.

The patent EP3396005 discloses the manufacturing of galvannealed steel sheets containing 3 to 8 weight % of manganese. It deals with the control of surface selective oxidation of manganese to eliminate uneven alloying. This patent discloses a step B of heating the steel sheet at 550°C to 700°C and holding the steel sheet at a steel sheet temperature of 550°C to 700°C for 30 seconds or less in a direct fired furnace (DFF) with a combustion gas having an air ratio of 1.00 to 1.20; and a step C of holding the steel sheet at 550°C to 700°C for 10 to 300 seconds in a reducing atmosphere having a hydrogen concentration of 1% to 50% by volume. However, such a heat treatment does not allow to fully recrystallize the steel sheet, which is not favorable for LME resistance.

The patent EP3020842 discloses the manufacturing of galvanized steel sheet containing 2 to 4 weight % of manganese. It describes an oxidation performed at an air-fuel ratio of 0.9 to 1.4 in an oxidizing zone, before the sheet is soaked above Ac3 in a reducing atmosphere with a dew point controlled from -30°C to -60°C. During oxidation, an iron oxide film can be formed in a surface and formation of a composite oxide film of silicon and manganese, which is harmful to plating properties, can be reduced. In addition, decarburization also occurs so that a desired soft layer is formed and bending workability is enhanced. Moreover, an internal oxide layer is included in such soft layer and can be used as a hydrogen trap to improve hydrogen embrittlement.

However, this patent doesn't describe the heating step nor discloses the heating speed of the heating step before the soaking step. Furthermore, it doesn't solve the problem of resistance to liquid metal embrittlement.

US2019/003006A1 discloses a Mn-containing galvannealed steel sheet particularly having good bendability and a beautiful surface appearance free from bare spots, and a method for producing the Mn-containing galvannealed steel sheet.

The purpose of the present invention is to provide a steel sheet containing from 3.0 to 6.0 weight % of manganese which has both a good coatability by liquid zinc and a good LME resistance. The present invention also aims to make available an easy to implement method to obtain said steel sheet and an assembly which does not have LME issues after spot-welding.

This purpose is achieved by providing a galvanized steel sheet according to claim 1. Another aim is achieved by providing an annealing treatment method according to claim 2. A final purpose is achieved by providing a spot welded joint according to claim 3. The spot-welded joint can also comprise characteristics of claims 5 to 6.

Other characteristics and advantages of the invention will become apparent from the following detailed description of the invention.

The designation "steel" or "steel sheet" means a steel sheet, a coil, a plate, composition of which allows the part to achieve a tensile strength up to 2500 MPa and more preferably up to 2000 MPa. For example, the tensile strength is above or equal to 980 MPa, preferably above or equal to 1270 MPa, and even above or equal to 1470 MPa.

To illustrate the invention, various embodiments and trials of non-limiting examples will be described, particularly with reference to the following figures:

Figure 1 illustrates the annealing thermic cycle according to the invention, with each step in the furnace.
Figure 2 illustrates the layer at the interface between the base metal and the galvanized plated layer.
Figure 3 illustrates the carbon content at $20\,\mu m$ depth measured from the interface with the plated layer as a function of dew points in the 2nd heating and soaking steps. Dark zones are according to the invention.
Figure 4 shows the spot-weld assembly used to validate the LME resistance of the steel sheet.

The invention relates to a galvanized steel sheet having the following composition comprising, by weight percent:

$$0.08 \leq C \leq 0.3 \%$$

$$3.0 \leq Mn \leq 6.0 \%$$

$$0.5 \leq Si \leq 2.5 \%$$

$$0.003 \leq Al \leq 2.0 \%$$

$$0.01 \leq Mo \leq 0.5 \%$$

$$0.01 \leq Ti \leq 0.1 \%$$

$$0.01 \leq Nb \leq 0.08 \%$$

$$0.0002 \leq B \leq 0.005$$

$$Cr \leq 1.0 \%$$

$$S \leq 0.010 \%$$

$$P \leq 0.025 \%$$

$$N \leq 0.008 \%$$

Preferably, the manganese weight percentage is of more than 3,5 %.

Preferably, the silicon weight percentage is of more than 0,7 %, advantageously of more than 1,0 %.

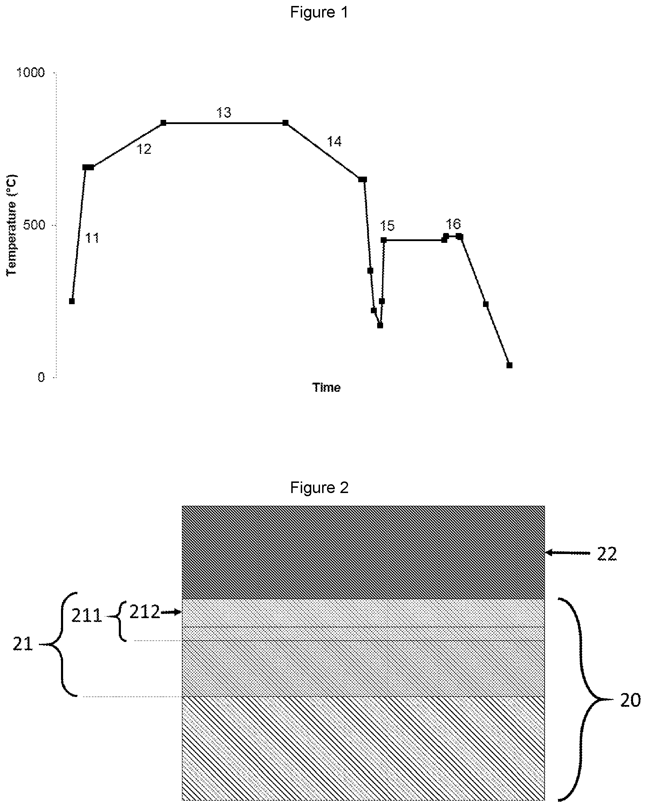

The invention relates also to a galvanized steel sheet including, as measured from the interface between the base metal (20) and the galvanized plated layer (22) in Figure 2:

a) a decarburized layer (21) starting at the interface with the plated layer wherein the carbon content is below 0.1 weight percent at a depth of 20 $\mu$m

b) said decarburized layer including a ferrite sublayer (211) starting at the interface with the plated layer wherein the ferrite content is above 70 % in terms of cross-sectional area fraction on a depth of at least 3 $\mu$m, and

c) said ferrite sublayer including an internal oxidation selective zone (212) starting from the interface with the plated layer and having a depth of at least 2.5 $\mu$m and containing manganese oxides, silicon oxides and optionally aluminum oxides.

The inventors have found that the steel sheet has a better resistance to LME due to the reduction of carbon amount in the interfacial layer in contact with the zinc plated layer. Indeed, it seems that carbon is an element highly sensitive to LME. Without to be bound by theory, the inventors have found that the carbon content at a depth of 20 $\mu$m from the interface with the plated layer has to be less than 0.1 weight percent in order to deliver good LME resistance. Preferably, the carbon content at a depth of 20 $\mu$m from the interface with the plated layer is less than 0.08 wt % or even 0.06 wt %.

The inventors have also found that a ferrite microstructure has a better LME resistance than a layer consisting of other phases. It seems that the low amount of carbon contained in ferrite compared to other phases is beneficial to LME resistance. It is required that the layer where the ferrite content is above 70 % in terms of cross-sectional area fraction has a depth of at least 3 $\mu$m, preferably 4 $\mu$m or even 5$\mu$m.

The inventors have found that the selective internal oxidation zone has a beneficial effect on Liquid Metal Embrittlement (LME) resistance. Without to be bound by theory, it is believed that the elements comprised in the internal oxidation zone, such as silicon, manganese and aluminum are present in a lower amount in solid solution at the direct interface with the zinc plated layer. Indeed, it seems that silicon is a sensitive element to LME. The inventors have found that the internal selective oxidation zone has to be of at least 2.5 µm to provide good LME resistance. Preferably, the internal oxidation selective zone starting the interface with the plated layer has a depth of at least 3.5 µm or even 4.5 µm.

The invention relates as well to a method for the manufacturing of the galvanized steel sheet, comprising the following steps, see figure 1:

i. A pre-heating step in a direct fired furnace (DFF) section 11 wherein the oxidizer/fuel ratio is of 1.00 or more,

ii. A heating step in a radiant tube heating (RTH) section 12 up to the temperature of soaking of at least Ae3 - 10°C, Ae3 being determined by dilatometry, with a dew point of at least 0°C, under a reducing atmosphere containing at least 1% of hydrogen in volume, the balance being nitrogen

iii. A soaking step in a radiant tube soaking (RTS) section 13 at a temperature of soaking with a dew point of at least 0°C and under a reducing atmosphere containing at least 1% of hydrogen in volume, the balance being nitrogen

iv. A cooling step 14 with a dew point lower than -20°C and under a reducing atmosphere containing at least 1% of hydrogen in volume, the balance being nitrogen,

v. An overageing or partitioning step 15,

vi. A galvanizing step 16.

Such an annealing treatment according to the invention, as illustrated on figure 1, allows a good coating ability and a good LME resistance.

During the pre-heating step in the DFF, it is mandatory to control the oxidation of the surface by the lambda value (λ). This value is commonly defined as the quantity ratio of oxidizer to fuel in the furnace atmosphere. In order to ensure a good coating ability, the lambda has to be of at least 1.00, preferably at least 1.02 or 1.04.

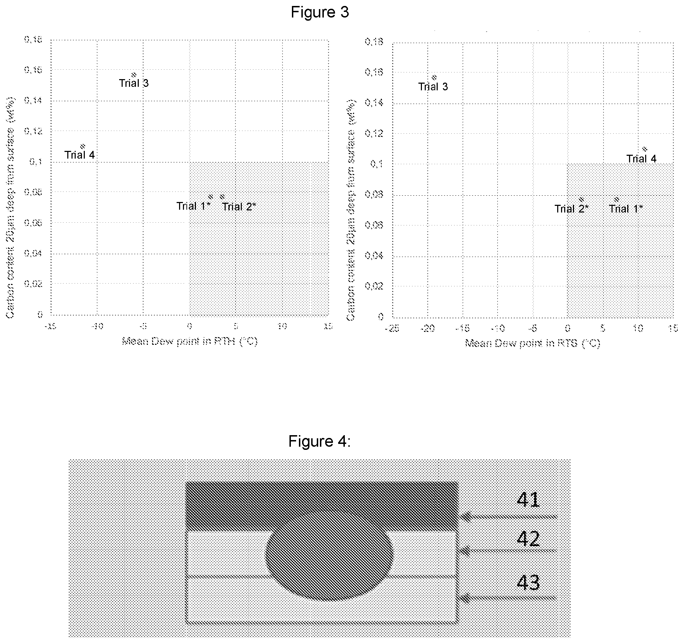

The steps following the heating in the DFF are of importance for the decarburization of the surface and the internal selective oxidation, both being linked with the subsequent LME resistance of the steel sheet. The atmosphere must be managed. The dew points in the radiant tube furnace are of major importance, as shown on figure 3. Without to be bound by any theory, it is believed that a dew point above 0°C is required both in the RTH of step ii. and in the RTS of step iii. to achieve the aimed layer, sublayer and zones a), b) and c) at the interface between the base metal and the plated layer. Preferably, the atmosphere in the RTH and RTS has a dew point of at least 3°C, advantageously of at least 5°C or even 7°C.

On the contrary to prior art methods such as the one disclosed in EP 3396005, the annealing cycle of the present invention includes a soaking step at 800°C or more to ensure the full recrystallization of the steel sheet. Preferably, the soaking step at step iii. can be performed at a temperature of at least 820°C or 840°C.

In the steps following the soaking in the RTS, a very dry atmosphere is needed to avoid re-oxidation of the surface. Oxidation of the surface would indeed degrade coatability of the steel sheet within liquid zinc. The dew point of the atmosphere at these steps has to be lower than -20°C. Preferably the atmosphere during cooling and final steps has a dew point lower than -25°C, advantageously lower than -40°C.

After annealing and galvanizing, the steel sheet is cut into blanks. It is then deformed, for example by press stamping to obtain a part. The part is assembled to other steel parts by welding, for examples by resistance spot welding. The cracks in spot welded joints are detrimental for their resistance.

The invention also relates to a spot-welded joint containing in average less than 0.5 cracks having a length above 100 µm by spot weld and wherein the longest crack has a length below 300 µm.

Preferably, the spot-welded joint contains in average less than 0.5 cracks having a length above 80 µm by spot weld, or less than 0.5 cracks having a length above 60 µm by spot weld.

Preferably, the longest crack is below 200 µm, or below 100 µm.

The invention will now be explained in trials carried out for information only. They are not limiting.

Examples

In this example, Mn-containing steels having the composition expressed in weight percentage in table 1 were used.

Table 1 - Composition

| C | Mn | Si | Al | Mo | Cr | Ti | Nb | B |
|------|-----|------|------|-----|-------|------|------|--------|
| 0.19 | 3.8 | 1.25 | 0.35 | 0.2 | 0.028 | 0.02 | 0.02 | 0.0025 |

The cold rolled steel coils having such composition went through a continuous annealing and galvanizing line.

The annealing furnace had several sections:

a first heating section by direct flame that is called DFF 11,
a second heating section by radiant tubes called RTH 12,
a soaking section by radiant tubes called RTS 13,
a first cooling section called slow cooling 14,
a second cooling section called quenching and,
a partitioning section 15
a galvanizing section 16.

The process parameters during annealing are shown in table 2.

Table 2 - Annealing process

| FURNACE SECTION | PRE-HEATING DFF | HEATING RTH | SOAKING RTS | | SLOW COOLING | QUENCHING | PARTITIONING |
|---|---|---|---|---|---|---|---|
| Trial Nr | Exit Temperature (°C) | Dew Point (°C) | Exit Temperature (°C) | Dew point (°C) | Dew point (°C) | Dew point (°C) | Dew point (°C) |
| 1* | 714 | 2.3 | 836 | 9 | -29 | -30 | -29 |
| 2* | 711 | 3.5 | 841 | 2 | -32 | -33 | -32 |
| 3 | 635 | -6.0 | 825 | -19 | -44 | -30 | -27 |
| 4 | 707 | -11.6 | 837 | 12 | -31 | -30 | -29 |
| *: according to the present invention. underlined values are not according to the invention | | | | | | | |

Then the coils were cut into samples for further analysis. The samples will still be designated by the original trial number, each one corresponding to specific process parameters highlighted in table 2.

One set of samples cut for analysis was investigated to obtain the internal oxidation depth and the depth of the decarburized layer.

The internal oxidation depth of the galvanized steel sheet was measured on an image observed by mean of Scanning Electron Microscopy (SEM) at the vicinity of the surface of the steel sheet. Internal oxides appear in the grain boundaries and inside grains of the base steel sheet close to the interface with the plated layer. The internal oxidation depth was defined by measuring the minimum depth from the interface between the plated layer and the deepest position where the oxides were observed. Observation was carried out in the plane RD-ND (rolling direction - normal direction) with a magnification higher than x5000.

The thickness of the sublayer containing at least 70% of ferrite in terms of volume fraction was determined with the same method as the depth of internal oxidation. Ferrite volume fraction is determined as mean value of the ferrite area fraction measured on the images in RD-ND (rolling direction - normal direction) plane. For the Carbon content at a depth of 20 μm within the steel sheet measured from the interface with the plated layer, Glow Discharge Optical Emission Spectroscopy (GDOES) qualitative and quantitative analysis was performed. 3 GDOES analyses on each sides of samples starting by the potentiometric dissolution of the coating plated layer before GDOES measurement. All depths are then expressed in Iron equivalent (μm (e,q,Fe)). Results are gathered in table 3.

Table 3 - Product properties

| | Carbon at 20 μm deep | Thickness containing 70% of ferrite or more | Internal Oxidation depth |
|---|---|---|---|
| | wt% | μm | μm |
| 1* | 0.077 | 6.5 | 4.3 |
| 2* | 0.077 | 5.4 | 3.0 |
| 3 | 0.157 | 2.3 | 1.6 |

(continued)

| | Carbon at 20 μm deep | Thickness containing 70% of ferrite or more | Internal Oxidation depth |
|---|---|---|---|
| | wt% | μm | μm |
| 4 | 0.110 | 4.8 | 3.6 |
| *: according to the present invention<br>underlined values are not according to the invention | | | |

Trials 1 and 2, which are according to the invention regarding internal oxidation zone, ferrite sublayer and decarburized layer, have seen an atmosphere with a positive dew point both in the RTH and RTS sections.

Trials 3 and 4, which are not according to the invention regarding internal oxidation zone, ferrite sublayer and decarburized layer, have seen an atmosphere with at least one negative dew point, be it in the RTH or in the RTS.

One another set of samples was submitted to a LME resistance test by means of spot welding.

The LME crack resistance behavior was evaluated using a three layers stack-up condition shown in figure 4. For each Trial, three coated steel sheets were welded together by resistance spot welding: the sheet to be tested (41) on the top and two mild steel sheets (42) and (43) below. The spot weld assembly was performed with 8 mm radius electrodes, a clamping force of 500 daN. The welding cycles consisted of 3 pulses during 0,2 s. each, with 0,04 s cooling time between each pulse.

After welding, all welds are carefully examined using Dye Penetrant Inspection (DPI) first, then using metallographic analysis. DPI is carried out after having chemically removed the galvanized Zn layer, which helps locating outer cracks. Metallographic analysis is carried out on central cross-sections in the welds based on the DPI observations. Metallographic samples are mounted in epoxy resin, mechanically polished down to a 1 micron polishing cloth, then etched in a picric acid solution. The distribution of cracks is then observed and classified with an optical microscope, the length of all visible LME cracks is measured and their number per crack category recorded.

The number of cracks having a length of 100 μm or more, as well as the maximum crack length were then evaluated using an optical microscope.

Results are shown in Table 4.

Table 4 - LME crack details after spot welding (3 layers stack-up condition)

| Trials | Average number of cracks per spot weld (>100 μm) | Maximum crack length (μm) |
|---|---|---|
| 1* | 0 | 0 |
| 2* | 0 | 0 |
| 3 | 0,7 | 602 |
| 4 | 0,6 | 939 |
| *: according to the present invention.<br>underlined values are not according to the invention | | |

Trial 1 and trial 2 according to the present invention show an excellent resistance to LME as compared to trials 3 and 4. Indeed, for trial 1 and 2, there are no cracks longer than 100 μm.

**Claims**

1.  Galvanized steel sheet, made of a steel base metal having a composition comprising, by weight percent:

$$0.08 \leq C \leq 0.3 \ \%$$

$$3.0 \leq Mn \leq 6.0 \ \%$$

$$0.5 \leq Si \leq 2.5 \ \%$$

$$0.003 \leq Al \leq 2.0 \%$$

$$0.01 \leq Mo \leq 0.5 \%$$

$$0.01 \leq Ti \leq 0.1 \%$$

$$0.01 \leq Nb \leq 0.08 \%$$

$$0.0002 \leq B \leq 0.005$$

$$Cr \leq 1.0 \%$$

$$S \leq 0.010 \%$$

$$P \leq 0.025 \%$$

$$N \leq 0.008 \%$$

and inevitable impurities from the manufacturing process, the remainder being iron,
said steel sheet including, as measured from the interface between the base metal (20) and the galvanized plated layer (22):

a) a decarburized layer (21) starting at the interface with the plated layer wherein the carbon content is below 0.1 weight percent at a depth of 20 $\mu$m, measured according to the description,
b) said decarburized layer including a ferrite sublayer (211) starting at the interface with the plated layer and having a depth of 3 $\mu$m or more, wherein the ferrite content is above 70 % in terms of cross-sectional area fraction, measured according to the description,
c) said ferrite sublayer including an internal oxidation selective zone (212) starting from the interface with the plated layer and having a depth of at least 2.5 $\mu$m and containing manganese oxides, silicon oxides and optionally aluminum oxides, measured according to the description.

2. A method for producing a galvanised steel, made of a steel base metal having a composition comprising, by weight percent:

$$0.08 \leq C \leq 0.3 \%$$

$$3.0 \leq Mn \leq 6.0 \%$$

$$0.5 \leq Si \leq 2.5 \%$$

$$0.003 \leq Al \leq 2.0 \%$$

$$0.01 \leq Mo \leq 0.5 \%$$

$$0.01 \leq Ti \leq 0.1 \%$$

$$0.01 \leq Nb \leq 0.08 \%$$

$$0.0002 \leq B \leq 0.005$$

$$Cr \leq 1.0\ \%$$

$$S \leq 0.010\ \%$$

$$P \leq 0.025\ \%$$

$$N \leq 0.008\ \%$$

and inevitable impurities from the manufacturing process, the remainder being iron,
said method comprising the following steps of annealing heat treatment cycle before galvanizing:

i. A pre-heating step in a direct fired furnace (DFF) section (11) wherein the oxidizer/fuel ratio is of 1.00 or more,
ii. A heating step in a radiant tube heating (RTH) section (12) up to a temperature of soaking of at least Ae3 - 10°C, Ae3 being determined by dilatometry, with a dew point of at least 0°C, under a reducing atmosphere containing at least 1% of hydrogen in volume, the balance being nitrogen
iii. A soaking step in a radiant tube soaking (RTS) section (13) at the temperature of soaking with a dew point of at least 0°C and under a reducing atmosphere containing at least 1% of hydrogen in volume, the balance being nitrogen
iv. A cooling step (14) with a dew point lower than -20°C and under a reducing atmosphere containing at least 1% of hydrogen in volume, the balance being nitrogen,
v. An overageing or a partitioning step (15),
vi. A galvanizing step (16).

3. Spot welded joint of at least two metal sheets comprising at least a steel sheet according to claim 1, said joint containing in average less than 0.5 cracks having a length above 100 $\mu$m by spot-weld and wherein the longest crack has a length below 300 $\mu$m, measured according to the description.

4. Spot welded joint according to claim 3, wherein the second metal sheet is a steel sheet or an aluminum sheet.

5. Spot welded joint according to claim 4, wherein the second metal sheet is a steel sheet according to claim 1.

6. Spot welded joint according to anyone of claims 3 to 5, comprising a third metal sheet being a steel sheet or an aluminum sheet.

**Patentansprüche**

1. Galvanisiertes Stahlblech, gefertigt aus einem Stahlgrundmetall mit einer Zusammensetzung, die, in Gewichtsprozent, Folgendes umfasst:

$$0{,}08 \leq C \leq 0{,}3\ \%$$

$$3{,}0 \leq Mn \leq 6{,}0\ \%$$

$$0{,}5 \leq Si \leq 2{,}5\ \%$$

$$0{,}003 \leq Al \leq 2{,}0\ \%$$

$$0{,}01\ \% \leq Mo \leq 0{,}5\ \%$$

$$0{,}01 \leq Ti \leq 0{,}1\ \%$$

$$0{,}01 \leq Nb \leq 0{,}08\ \%$$

$$0{,}0002 \leq B \leq 0{,}005$$

$$Cr \leq 1{,}0\ \%$$

$$S \leq 0{,}010\ \%$$

$$P \leq 0{,}025\ \%$$

$$N \leq 0{,}008\ \%$$

und unvermeidliche Verunreinigungen aus dem Fertigungsprozess, wobei der Rest aus Eisen ist, wobei dieses Stahlblech, gemessen von der Grenzfläche zwischen dem Grundmetall (20) und der galvanisierten plattierten Schicht (22) Folgendes umfasst:

a) eine entkohlte Schicht (21), die an der Grenzfläche mit der plattierten Schicht beginnt, wobei der Kohlenstoffgehalt in einer Tiefe von 20 $\mu$m unter 0,1 Gewichtsprozent liegt, gemessen gemäß der Beschreibung,
b) wobei diese entkohlte Schicht eine Ferritunterschicht (211) enthält, die an der Grenzfläche mit der plattierten Schicht beginnt und eine Tiefe von 3 $\mu$m oder mehr aufweist, wobei der Ferritgehalt über 70 %, ausgedrückt als Querschnittsflächenanteil, gemessen gemäß der Beschreibung, beträgt,
c) wobei die Ferritunterschicht eine innere oxidationsselektive Zone (212) aufweist, die von der Grenzfläche zur plattierten Schicht ausgeht und eine Tiefe von mindestens 2,5 $\mu$m hat und Manganoxide, Siliziumoxide und gegebenenfalls Aluminiumoxide enthält, gemessen gemäß der Beschreibung.

2. Verfahren zum Herstellen von galvanisiertem Stahl, gefertigt aus einem Stahlgrundmetall mit einer Zusammensetzung, die, in Gewichtsprozent, Folgendes umfasst:

$$0{,}08 \leq C \leq 0{,}3\ \%$$

$$3{,}0 \leq Mn \leq 6{,}0\ \%$$

$$0{,}5 \leq Si \leq 2{,}5\ \%$$

$$0{,}003 \leq Al \leq 2{,}0\ \%$$

$$0{,}01\ \% \leq Mo \leq 0{,}5\ \%$$

$$0{,}01 \leq Ti \leq 0{,}1\ \%$$

$$0{,}01 \leq Nb \leq 0{,}08\ \%$$

$$0{,}0002 \leq B \leq 0{,}005$$

$$Cr \leq 1{,}0\ \%$$

$$S \leq 0{,}010\ \%$$

$$P \leq 0{,}025\ \%$$

$$N \leq 0{,}008\ \%$$

und unvermeidliche Verunreinigungen aus dem Fertigungsprozess, wobei der Rest aus Eisen ist, wobei das Verfahren die folgenden Schritte eines Glüh-Wärmebehandlungszyklus vor dem Galvanisieren umfasst:

i. ein Vorwärmschritt in einem Abschnitt mit direkt befeuertem Ofen (DFF) (11), wobei das Oxidationsmittel/-Brennstoff-Verhältnis 1,00 oder mehr beträgt,

ii. ein Erwärmungsschritt in einem Abschnitt mit Strahlrohrbrenner (RTH) (12) bis zu einer Durchwärmungstemperatur von mindestens Ae3 - 10 °C, wobei Ae3 durch Dilatometrie bestimmt wird, mit einem Taupunkt von mindestens 0 °C, unter einer reduzierenden Atmosphäre, die mindestens 1 VolumenprozentWasserstoff enthält, wobei der Rest Stickstoff ist,

iii. ein Durchwärmungsschritt in einem Abschnitt zur Strahlrohrdurchwärmung (13) bei einer Durchwärmungstemperatur mit einem Taupunkt von mindestens 0 °C und unter einer reduzierenden Atmosphäre, die mindestens 1 Volumenprozent Wasserstoff enthält, wobei der Rest Stickstoff ist,

iv. einen Kühlschritt (14) mit einem Taupunkt unter -20 °C und unter einer reduzierenden Atmosphäre, die mindestens 1 Volumenprozent Wasserstoff enthält, wobei der Rest Stickstoff ist,

v. ein Überalterungs- oder Teilungsschritt (15),

vi. ein Galvanisierungsschritt (16).

3. Punktschweißverbindung von mindestens zwei Metallblechen, die mindestens ein Stahlblech nach Anspruch 1 umfasst, wobei die Verbindung im Durchschnitt weniger als 0,5 Risse mit einer Länge von mehr als 100 $\mu$m durch Punktschweißen enthält und wobei der längste Riss eine Länge von weniger als 300 $\mu$m hat, gemessen gemäß der Beschreibung.

4. Punktschweißverbindung nach Anspruch 3, wobei das zweite Metallblech ein Stahlblech oder ein Aluminiumblech ist.

5. Punktschweißverbindung nach Anspruch 4, wobei das zweite Metallblech ein Stahlblech nach Anspruch 1 ist.

6. Punktschweißverbindung nach einem der Ansprüche 3 bis 5, umfassend ein drittes Blech, das ein Stahlblech oder ein Aluminiumblech ist.

**Revendications**

1. Tôle d'acier galvanisé, constituée d'un métal de base en acier présentant une composition comprenant, en pourcentage en poids :

$$0,08 \leq C \leq 0,3 \, \%$$

$$3,0 \leq Mn \leq 6,0 \, \%$$

$$0,5 \leq Si \leq 2,5 \, \%$$

$$0,003 \leq Al \leq 2,0 \, \%$$

$$0,01 \leq Mo \leq 0,5 \, \%$$

$$0,01 \leq Ti \leq 0,1 \, \%$$

$$0,01 \leq Nb \leq 0,08 \, \%$$

$$0,0002 \leq B \leq 0,005$$

$$Cr \leq 1,0 \, \%$$

$$S \leq 0,010\ \%$$

$$P \leq 0,025\ \%$$

$$N \leq 0,008\ \%$$

et des impuretés inévitables provenant du processus de fabrication, le reste étant constitué de fer, ladite tôle d'acier comprenant, mesurée à partir de l'interface entre le métal de base (20) et la couche plaquée galvanisée (22) :

a) une couche décarburée (21) commençant à l'interface avec la couche plaquée, dans laquelle la teneur en carbone est inférieure à 0,1 % en poids à une profondeur de 20 $\mu$m, mesurée conformément à la description,
b) ladite couche décarburée comprend une sous-couche de ferrite (211) commençant à l'interface avec la couche plaquée et ayant une profondeur de 3 $\mu$m ou plus, dans laquelle la teneur en ferrite est supérieure à 70 % en termes de fraction de surface de section transversale, mesurée selon la description,
c) cette sous-couche de ferrite comprend une zone sélective d'oxydation interne (212) commençant à l'interface avec la couche plaquée et ayant une profondeur d'au moins 2,5 $\mu$m et contenant des oxydes de manganèse, des oxydes de silicium et éventuellement des oxydes d'aluminium, mesurés conformément à la description.

2. Procédé de production d'un acier galvanisé, constitué d'un métal de base en acier ayant une composition comprenant, en pourcentage de poids :

$$0,08 \leq C \leq 0,3\ \%$$

$$3,0 \leq Mn \leq 6,0\ \%$$

$$0,5 \leq Si \leq 2,5\ \%$$

$$0,003 \leq Al \leq 2,0\ \%$$

$$0,01 \leq Mo \leq 0,5\ \%$$

$$0,01 \leq Ti \leq 0,1\ \%$$

$$0,01 \leq Nb \leq 0,08\ \%$$

$$0,0002 \leq B \leq 0,005$$

$$Cr \leq 1,0\ \%$$

$$S \leq 0,010\ \%$$

$$P \leq 0,025\ \%$$

$$N \leq 0,008\ \%$$

et des impuretés inévitables provenant du processus de fabrication, le reste étant du fer, ce procédé comprenant les étapes suivantes : cycle de traitement thermique de recuit avant la galvanisation :

i. Une étape de préchauffage dans une section de four à combustion directe (11) dans laquelle le rapport oxydant/combustible est égal ou supérieur à 1,00,

**EP 4 437 155 B1**

ii. Une étape de chauffage dans une section de chauffage à tubes radiants (RTH) (12) jusqu'à une température de trempage d'au moins Ae3 - 10 °C, Ae3 étant déterminé par dilatométrie, avec un point de rosée d'au moins 0 °C, sous une atmosphère réductrice contenant au moins 1 % d'hydrogène en volume, le reste étant de l'azote

iii. Une étape de trempage dans une section de trempage à tube radiant (RTS) (13) à la température de trempage avec un point de rosée d'au moins 0 °C et sous une atmosphère réductrice contenant au moins 1 % d'hydrogène en volume, le reste étant de l'azote

iv. Une étape de refroidissement (14) avec un point de rosée inférieur à - 20 °C et sous une atmosphère réductrice contenant au moins 1 % d'hydrogène en volume, le reste étant de l'azote,

v. Une étape de survieillissement ou de partitionnement (15),

vi. Une étape de galvanisation (16).

3. Joint soudé par points d'au moins deux tôles métalliques comprenant au moins une tôle d'acier selon la revendication 1, ledit joint contenant en moyenne moins de 0,5 fissures d'une longueur supérieure à 100 $\mu$m par soudage par points et dans lequel la fissure la plus longue a une longueur inférieure à 300 $\mu$m mesurée selon la description.

4. Joint soudé par points selon la revendication 3, dans lequel la deuxième tôle est une tôle d'acier ou une tôle d'aluminium.

5. Joint soudé par points selon la revendication 4, dans lequel la deuxième tôle est une tôle d'acier selon la revendication 1.

6. Joint soudé par points selon l'une quelconque des revendications 3 à 5, comprenant une troisième tôle qui est une tôle d'acier ou une tôle d'aluminium.

**13**

Figure 1

Figure 2

Figure 3

Figure 4:

**EP 4 437 155 B1**

**REFERENCES CITED IN THE DESCRIPTION**

**Patent documents cited in the description**

- EP 3396005 A
- EP 3020842 A
- US 2019003006 A1